# EUROPÄISCHE PATENTANMELDUNG

(11) **EP 3 366 640 A1**
(43) Veröffentlichungstag der Anmeldung: **29.08.2018**
(21) Anmeldenummer: 17400010.9
(22) Anmeldetag: 28.02.2017
(51) Int. Cl.: C01B 3/36

(54) **VERFAHREN UND ANLAGE ZUR PARTIALOXIDATION**

(71) Anmelder: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Covella, Karsten, D-61130 Nidderau (DE); Müller-Hagedorn, Matthias, D-76199 Karlsruhe (DE); Riße, Matthias, 50968 Köln (DE)
(74) Vertreter: Dropsch, Holger

(57) **Zusammenfassung**

Verfahren und Anlage zur Partialoxidation zur Erzeugung eines kohlenmonoxid- und wasserstoffhaltiges Synthesegases aus kohlenwasserstoffhaltigem Eduktmaterial, wobei die Reformierungsreaktionen durch Erhöhung der Turbulenz im Prozessgas unterstützt werden.

## Beschreibung

### Gebiet der Erfindung

Die Erfindung betrifft ein Partialoxidationsverfahren zur Erzeugung eines kohlenmonoxid- und wasserstoffhaltigen Synthesegases aus kohlenwasserstoffhaltigem Eduktmaterial, wobei folgende Verfahrensschritte durchgeführt werden:
- Bereitstellen der Edukte, umfassend einen kohlenwasserstoffhaltigen Stoff, ein sauerstoffhaltiges Gas und optional Dampf,
- Bereitstellen eines Reaktors, umfassend ein stehend angeordnetes, mit feuerfestem Material ausgekleidetes Reaktorgefäß mit einer darin liegenden Reaktionskammer, einer am oberen Ende des Gefäßes liegenden Öffnung für die Einleitung des Eduktgemisches und einer am unteren Ende liegenden Öffnung für die Ausleitung des Synthesegases als Produktgas und eine daran anschließende Verbindungsleitung zu einem Gaskühler und einen Mischer/Brenner zur Erzeugung eines Gemisches aus den Edukten, wobei der Mischer/Brenner so auf die obere Öffnung des Reaktorgefäßes montiert ist, dass über ihn das Eduktgemisch in das Reaktorgefäß eingeleitet werden kann,
- Einleiten der Edukte über den Mischer/Brenner in die Reaktionskammer des Reaktorgefäßes, mit den für die chemischen Umwandlungsreaktionen der Partialoxidation erforderlichen Temperaturen und Drücken,
- Umwandlung des Eduktgemischs in Synthesegas innerhalb der Reaktionskammer,
- Ausleitung des Synthesegases durch die Verbindungsleitung aus dem Reaktorgefäß zur weiteren Behandlung in einem Gaskühler.

Die Erfindung betrifft ebenso eine Anlage zur Durchführung des Partialoxidationsverfahrens.

### Stand der Technik

Partialoxidationsverfahren zur Umwandlung von kohlenwasserstoffhaltigem Gas in ein kohlenmonoxid- und wasserstoffhaltiges Synthesegas sind an sich bekannt. Praktische Bedeutung haben beispielsweise die Verfahren der Firmen Shell und Texaco, deren Grundzüge beispielsweise in Ullmanns Encyklopädie der technischen Chemie, 4. Auflage (1973), Band 3, Seite 340 - 341 beschrieben sind.

Das durch Partialoxidation umgewandelte, kohlenwasserstoffhaltige Gas kann aus Kohle, Rückständen aus der Erdölverarbeitung bzw. Schweröl gewonnen werden. Das kohlenwasserstoffhaltige Gas, gegebenenfalls vermischt mit Dampf, wird zusammen mit Sauerstoff als Eduktgemisch über einen Mischer/Brenner der Reaktionskammer eines Reaktors zugeführt, in dem bei Temperaturen zwischen 1200 und 1500 °C und Drücken von 20 bis 120 bar die Vergasungsreaktionen ablaufen. Dabei wird ein Teil der Kohlenwasserstoffe zur Gewinnung der für die Vergasungsreaktionen notwendigen Wärmeenergie verbrannt. Dies geschieht in der sich am Mischer/Brenner-Austritt bildenden Flammenzone. An diese schließt sich die sogenannte Reformierungszone an, die den Rest der Reaktorkammer ausfüllt. Bei der Partialoxidation wird kein Katalysator verwendet, sodass auch Kohlenwasserstoffe mit hohem Gehalt an Verunreinigungen, wie Schwefel, verarbeitet werden können.

Das beim Ablauf des Partialoxidationsverfahrens in der Reaktionskammer erzeugte Gemisch aus Edukten und Produkten, das Synthesegas-Produktgas, wird im Folgenden alternativ auch als Prozessgas bezeichnet.

Die Patentschrift GB 1 342 116 beschreibt einen Reaktionsapparat zur Durchführung der Partialoxidation. Dieser umfasst einen stehend angeordneten Reaktor mit einem Mischer/Brenner, über den die Eduktgase so in die feuerfest ausgekleidete Reaktorkammer des Reaktors geleitet werden, dass es darin zu einer guten Vermischung der reagierenden Gase und zu einem möglichst weitgehenden Ablauf der chemischen Reaktionen in der Reaktorkammer kommt. Am unteren Ende des Reaktors wird das erzeugte Synthesegas aus der Reaktorkammer ausgeleitet und anschließend durch eine Transferleitung einem Wärmeaustauscher zugeleitet, Der Wärmeaustauscher dient zur Nutzung der im Synthesegas enthaltenen, fühlbaren Wärme zur Dampferzeugung.

Durch das Fehlen eines Katalysators ist es grundsätzlich schwierig, einen ausreichenden Umsatz der eingesetzten Kohlenwasserstoffe und damit einen niedrigen Restmethangehalt im Produktgas zu erreichen. Zur Optimierung des Umsatzes stehen die Prozessparameter Temperatur, Güte der Gasdurchmischung und die Verweilzeit des Gases in der Reaktorkammer zur Verfügung.

Mit zunehmender Temperatur wird eine Zunahme der Reaktionsgeschwindigkeiten zwischen den Gasen erreicht, allerdings führen die erhöhten Reaktionsgeschwindigkeiten auch zu einem erhöhten Sauerstoffbedarf des Prozesses und zu einem erhöhten Dampf- und Kohlendioxidgehalt im Produktgas. Außerdem steigt mit der Temperatur die Belastung für die zum Bau des Reaktionsapparates verwendeten Materialien.

Durch geeignete Konstruktion des Mischer/Brenners und, abgestimmt damit, durch geeignete Konstruktion der Reaktionskammer kann die Güte der Gasdurchmischung, der Strömungsverlauf und die Verweilzeit des Gases in der Reaktorkammer beeinflusst werden. Dabei sind der Verweilzeit durch die Größe der Reaktionskammer und den davon abhängigen Baukosten enge Grenzen gesetzt. Das geeignete Design für eine optimale Gasdurchmischung und Strömungsführung zu finden, ist sehr aufwendig, insbesondere da sich bei einem Up- oder Downscaling der Apparate die Strömungsverläufe stark ändern können und das Design der Bauteile überarbeitet werden muss.

Die Aufgabe der vorliegenden Erfindung ist es daher, ein Verfahren zur Verfügung zu stellen, bei dem die Nachteile des Stands der Technik in geringerem Umfang auftreten.

### Beschreibung der Erfindung

Die Aufgabe wird durch ein Verfahren gemäß den Merkmalen des Anspruchs 1 und durch eine Anlage gemäß den Merkmalen des Anspruchs 13 gelöst.

Dadurch, dass erfindungsgemäß die Prozessgase durch die Durchmischung erhöhenden oder strömungslenkenden Einbauten, die als statische Mischeinrichtung wirken, und/oder eine ebenfalls als Mischeinrichtung wirkende Schicht aus Formkörpern geleitet werden, wird die Durchmischung der Gase verbessert. Die Formkörper können dabei jede Form haben, die die Durchmischung des Prozessgases fördert, insbesondere die Turbulenz in der Gasströmung beim Durchströmen der Formkörperschicht erhöht. Dabei kommt eine Formkörperschicht bevorzugt in der Reaktorkammer und die die Durchmischung erhöhenden Einbauten kommen bevorzugt in der Verbindungsleitung zwischen dem Reaktorgefäß und dem Gaskühler zum Einsatz.

Durch diese erfindungsgemäßen Maßnahmen wird die Vermischung, insbesondere die Turbulenz im Prozessgas erhöht und damit die Vermischung der Gaskomponenten verbessert. Damit wird die Möglichkeit erhöht, dass reaktionsbereite Gasmoleküle zusammentreffen und damit die Geschwindigkeit der im Reaktor ablaufenden chemischen Reaktionen gesteigert. Dadurch werden die Anforderungen an das Design des Mischer/Brenners oder der Reaktorkammer vereinfacht, um eine optimale Strömungsführung hinsichtlich der Gasdurchmischung oder der Verweilzeit zu erreichen. Ein weiterer Vorteil der Erfindung besteht. in der Möglichkeit die Prozesstemperatur, bei gleichbleibendem Reaktionsumsatz, zu senken.

### Bevorzugte Ausgestaltungen der Erfindung

Eine bevorzugte Ausgestaltung der Erfindung ist dadurch gekennzeichnet, dass es sich bei den die Durchmischung erhöhenden Einbauten um statische Mischer handelt. Statische Mischer sind seit langem in der Verfahrenstechnik bewährt und in zahlreichen Varianten verfügbar.

Eine weitere bevorzugte Ausgestaltung der Erfindung ist dadurch gekennzeichnet, dass es sich bei den die Durchmischung erhöhenden Einbauten um strukturierte Packungen handelt. Strukturierte Packungen sind einfach in den Reaktionsraum einzubauen. Sie liefern ein exakt definiertes Strömungsergebnis, das auch bei Austausch der Packung gut reproduzierbar ist.

Eine weitere bevorzugte Ausgestaltung der Erfindung ist dadurch gekennzeichnet, dass es sich bei den Formkörpern um Kugeln handelt. Es handelt sich dabei um ein handelsübliches Produkt. Durch Auswahl des geeigneten Kugeldurchmessers kann die Mischwirkung und der Druckverlust des Prozessgases über die Schüttung eingestellt werden. Bevorzugt werden dabei insbesondere Kugeln aus keramischen Materialen, beispielsweise auf Basis von Al₂O₃, da sie die nötige mechanische und thermische Stabilität aufweisen und chemisch inert sind.

Eine weitere bevorzugte Ausgestaltung der Erfindung ist dadurch gekennzeichnet, dass die statische Mischeinrichtung oder die Formkörpern der Schüttung aus Schaumkeramik bestehen. Diese sind durch eine hohe thermische Stabilität bei geringet spezifischer Masse gekennzeichnet.

Eine weitere bevorzugte Ausgestaltung der Erfindung ist dadurch gekennzeichnet, dass die Mischeinrichtung oder die Formkörper aus Al₂O₃ bestehen. Dieses Material ist inert gegenüber den im Prozessgas ablaufenden chemischen Reaktionen. Außerdem ist das Material thermisch stabil und marktüblich.

Eine weitere bevorzugte Ausgestaltung der Erfindung ist dadurch gekennzeichnet, dass die Mischeinrichtung oder die Formkörper zwischen 1 und 50 Vol.-%, bevorzugt zwischen 20 und 40 Vol.-% der Reaktionskammer einnehmen. In diesem Bereich ist genügend freies Volumen für eine gleichmäßige Verteilung des Gases in der Reaktorkammer vorhanden und gleichzeitig sind genügend Mischelemente, wie Formkörper oder Einbauten, vorhanden, um eine gute Mischwirkung zu erzielen.

Eine weitere bevorzugte Ausgestaltung der Erfindung ist dadurch gekennzeichnet, dass das Verfahren mit einem Druck zwischen 10 und 100 bar in der Reaktorkammer durchgeführt wird. Dieser Bereich ermöglicht einen sinnvollen Kompromiss zwischen hohem Durchsatz bei kompakten Abmessungen und einer Gleichgewichtslage, die ausreichenden Umsatz erlaubt.

Eine weitere bevorzugte Ausgestaltung der Erfindung ist dadurch gekennzeichnet, dass das Verfahren mit einer Temperatur zwischen 900 und 1500 °C, vorzugsweise zwischen 1200 und 1400 °C in der Reaktorkammer durchgeführt wird. Dieses stellt einen sinnvol[en Kompromiss zwischen ausreichendem Umsatz, begrenztem Sauerstoffbedarf und thermischer Stabilität der Materialien dar.

Eine weitere bevorzugte Ausgestaltung der Erfindung ist dadurch gekennzeichnet, dass das Verfahren mit einem molaren Mengenverhältnis von Dampf / Kohlenstoff im Eduktgasgemisch zwischen 0 und 0,6 durchgeführt wird. Hierdurch kann das Wasserstoff/Kohlenmonoxidverhältnis im Synthesegas eingestellt werden.

Eine weitere bevorzugte Ausgestaltung der Erfindung ist dadurch gekennzeichnet, dass das Verfahren mit einem molaren Mengenverhältnis von Sauerstoff / Kohlenstoff im Eduktgasgemisch zwischen 0,5 und 0,8 durchgeführt wird, um den o. g. Temperaturbereich zu erzielen.

### Ausführungsbeispiele

Weiterbildungen, Vorteile und Anwendungsmöglichkeiten der Erfindung ergeben sich auch aus der nachfolgenden Beschreibung von nicht beschränkenden Ausführungs- und Zahlenbeispielen und den Zeichnungen. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Die Erfindung soll im Folgenden anhand der Zeichnung sowie anhand von Versuchsdaten und Ergebnissen von Simulationsrechnungen näher erläutert werden.

Dabei zeigen:
- Fig. 1: Schnitt durch einen erfindungsgemäßen Reaktor mit einer Schüttung aus Formkörpern in der Reaktionskammer,
- Fig. 2: Schnitt durch einen erfindungsgemäßen Reaktor mit Einbauten in der Reaktionskammer und in der Verbindungsleitung,
- Fig. 3: Schnitt durch einen erfindungsgemäßen Reaktor mit einer Schüttung aus Formkörpern in der Reaktionskammer und Einbauten in der Verbindungsleitung.

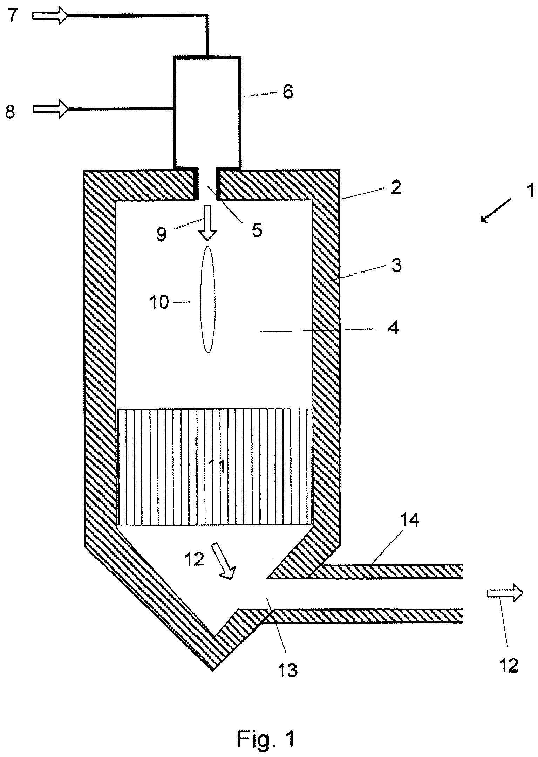

Fig. 1 zeigt einen Schnitt durch einen erfindungsgemäßen Reaktor. Der Reaktor 1 umfasst das Reaktorgefäß 2 mit der feuerfesten Auskleidung 3. Im Reaktor 1 befindet sich die Reaktorkammer 4. Auf die obere Öffnung 5 der Reaktorkammer 4 ist der Mischer/Brenner 6 aufgesetzt. Der Mischer/Brenner 6 erzeugt aus den Edukten Kohlenwasserstoff 7 und Sauerstoff/Dampf 8 das Eduktgasgemisch 9. Die Edukte 7 und 8 werden dem Mischer/Brenner 6 zugeführt, so dass sich beim Austritt aus dem Mischer/Brenner 9 in die Reaktorkammer 4 eine stabile Flammenzone 10 ausbilden kann. Die Flammenzone geht im unteren Bereich der Reaktorkammer in die Reformierungszone über, in der eine Schicht aus Formkörpern 11 angeordnet ist. Nach dem Durchströmen der Reformierungszone sind die Eduktgase weitgehend in Produktgas, d. h. Synthesegas 12 umgewandelt. Das Produktgas 12 verlässt durch die untere Öffnung 13 die Reaktorkammer 4 und wird durch die Verbindungsleitung 14 einem nicht bildlich dargestellten Gaskühler zugeführt.

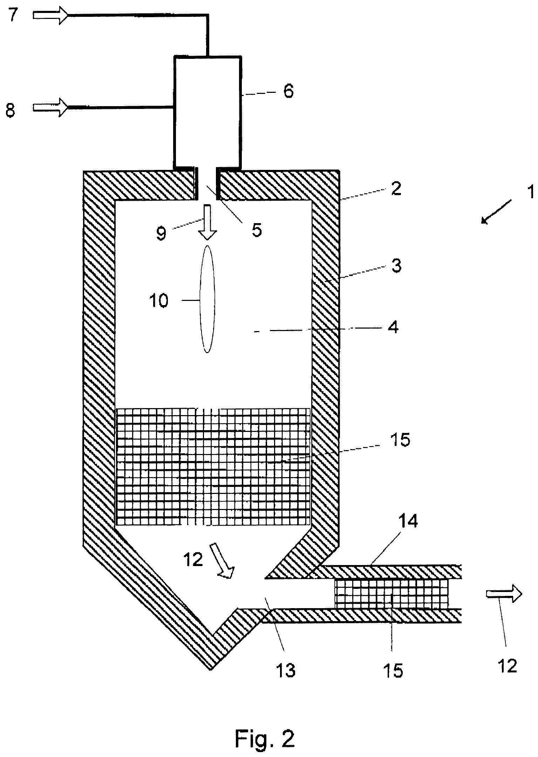

Fig. 2 zeigt einen Schnitt durch einen erfindungsgemäßen Reaktor der gleichen Bauart wie in Fig. 1 gezeigt. Anders als in Fig. 1 sind hier in der Reaktorkammer 4 und auch in der Verbindungsleitung 14 die Durchmischung erhöhende Einbauten 15 installiert.

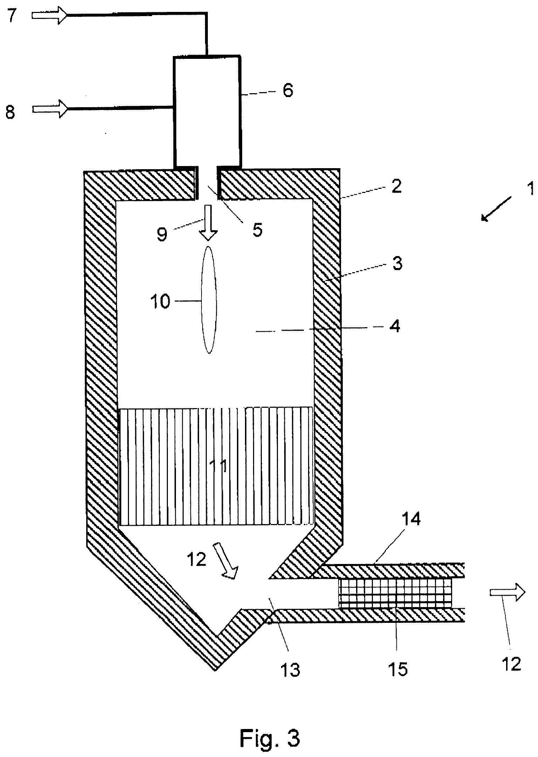

Fig. 3 zeigt einen Schnitt durch einen erfindungsgemäßen Reaktor der gleichen Bauart, wie in Fig. 1 und Fig. 2 gezeigt. Hier ist, wie in Fig. 1, in der Reaktorkammer eine Schicht aus Formkörpern 11 angeordnet und, wie in Fig. 2, sind hier in der Verbindungsleitung 14 die Durchmischung erhöhende Einbauten 15 installiert.

Ebenfalls zu der Erfindung gehören die bildlich nicht dargestellten Ausgestaltungen, bei denen entweder nur die Reaktorkammer, aber nicht die Verbindungsleitung, oder nur die Verbindungsleitung, aber nicht die Reaktorkammer mit die Durchmischung erhöhenden Einbauten ausgestattet sind.

### Zahlenbeispiele

### Versuche

Um die Wirkung einer Schüttung aus Formkörpern in der Reaktorkammer eines Partialoxidationsreaktors zu testen, wurden zwei Versuche, bei 50 und bei 60 bar Druck in der Reaktorkammer oberhalb der Mischeinrichtung, jeweils mit und ohne Mischeinrichtung durchgeführt. In der ersten Phase A wurde die Partialoxidation gemäß dem bisherigen Stand der Technik mit einer leeren Reaktorkammer und dann, in der zweiten Phase B, unter sonst gleichen Bedingungen, mit einer eine Schüttung aus Formkörpern enthaltenden Reaktionskammer durchgeführt.

Als Mischeinrichtung wurde in der Reaktorkammer eine Schicht aus kugelförmigen Formkörpem verwendet. Der Durchmesser der Schicht, entsprechend dem Innendurchmesser der Reaktorkammer, betrug 500 mm, die Dicke der Schicht 900 mm und der Durchmesser der Kugeln 20 mm. Die Kugeln bestanden aus Al₂O₃. Die Versuchsergebnisse sind in den beiden nachfolgenden Tabellen zusammengestellt.

| **Versuch 1** | V_{O2}/V_{NG} | V_{H2+CO}/V_{NG} | V_{H2+CO. tr} | CH_{4, Syngas. tr} | T_{Reaktor} |
|---|---|---|---|---|---|
| 50 bar | [Nm³/Nm³] | [Nm³/Nm³] | [Nm³/h] | [mol-%] | [°C] |
| Phase A*) | 0,76 | 2,53 | 859 | 0,15 | 1420 |
| Phase B**) | 0,76 | 2,69 | 904 | 0,11 | 1400 |

| **Versuch 2** | V_{O2}/V_{NG} | V_{H2+CO}/V_{NG} | V_{H2+CO. tr} | CH_{4,Syngas, tr} | T_{Reaktor} |
|---|---|---|---|---|---|
| 60 bar | [Nm³/Nm³] | [Nm³/Nm³] | [Nm³/h] | [mol-%] | [°C] |
| Phase A*) | 0,74 | 2,54 | 872 | 0,51 | 1380 |
| Phase B**) | 0,74 | 2,63 | 906 | 0,27 | 1330 |

| | | | | | |
|---|---|---|---|---|---|
| *) ohne Mischeinrichtung **) mit Mischeinrichtung | | | | | |

Bei diesen Versuchen wurden Erdgas und Sauerstoff als Eduktgase eingesetzt. In Versuchsphase B, in der eine Schüttung aus Formkörpern in der Reaktorkammer vorhanden war, wurde ein erhöhtes Volumenverhältnis von Wasserstoff und Kohlenmonoxid im Produktgas zum eingesetzten Erdgas NG erhalten. Weiterhin wurde ein geringerer Rest-CH₄-Gehalt im Synthesegas, tr (trocken) erreicht. Diese positiven Ergebnisse wurden bei geringerer Prozesstemperatur im Reaktor erreicht.

### Simulationsrechnungen

In einer ersten Rechnung wurde die Wirkung einer Mischeinrichtung in der Reaktorkammer bei in beiden Phasen gleicher Sauerstoffmenge im Eduktgas simuliert. Die Ergebnisse dieser Simulationsrechnungen sind ebenfalls in Tabellenform zusammengestellt.

| **Rechnung 1** | **O_{2, Edukt}** | **T_{Reaktor}** | **Synthesegas** | **CH_{4, Syngas, tr}** |
|---|---|---|---|---|
| | [kg/h] | [°C] | [kmol/h] | [mol-%] |
| Phase A*) | 450 | 1403 | 52,68 | 0,50 |
| Phase B**) | 450 | 1387 | 53,24 | 0,25 |

| | | | | |
|---|---|---|---|---|
| *) ohne Mischeinrichtung **) mit Mischeinrichtung | | | | |

Diese erste Rechnung zeigt, dass durch die Mischeinrichtung, sogar mit abgesenkter Prozesstemperatur, der Restmethangehalt im Synthesegas gesenkt wird.

In einer zweiten Rechnung wurde die Wirkung einer Mischeinrichtung in der Reaktorkammer bei in beiden Phasen gleichem Restmethangehalt im Synthesegas, bezogen auf den trockenen Zustand des Synthesegases, simuliert.

| Rechnung 2 | O_{2, Edukt} | T_{Reaktor} | Synthesegas | CH_{4, Syngas. tr} |
|---|---|---|---|---|
| | [kg/h] | [°C] | [kmol/h] | [mol-%] |
| Phase A*) | 450 | 1403 | 52,68 | 0,50 |
| Phase B**) | 438 | 1330 | 53,36 | 0,50 |

| | | | | |
|---|---|---|---|---|
| *) ohne Mischeinrichtung **) mit Mischeinrichtung | | | | |

Diese zweite Rechnung zeigt, dass durch die Mischeinrichtung die Menge an eingesetztem Sauerstoff, bzw. die Prozesstemperatur, gesenkt werden kann, wobei die Synthesegasausbeute dennoch steigt.

Unter Anwendung des erfindungsgemäßen Verfahrens ist es demnach möglich, den Sauerstoffbedarf bei gleichem Restmethangehalt im Synthesegas im Vergleich zum Betrieb der partiellen Oxidation nach dem Stand der Technik potentiell um bis zu 3 % zu reduzieren. Zudem kann die Temperatur deutlich um ca. 70 K gesenkt werden. Bei gleicher Sauerstoffzufuhr lässt sich dementsprechend ein höherer Methanumsatz erzielen. Zudem liegt die produzierte Synthesegasmenge, verglichen mit der partiellen Oxidation nach dem Stand der Technik, in beiden Simulationsszenarien zwischen 1,07 mol-% und 1,3 mol-% höher.

### Gewerbliche Anwendbarkeit

Die Erfindung stellt ein verbessertes Verfahren und einen verbesserten Apparat für die Erzeugung von Synthesegas durch Partialoxidation zur Verfügung und ist damit gewerblich anwendbar.

### Bezugszeichenliste

- 1: erfindungsgemäße Anlage zur Partialoxidation
- 2: Reaktor
- 3: Feuerfeste Auskleidung
- 4: Reaktionskammer
- 5: Öffnung für die Einleitung des Eduktgasgemisches
- 6: Mischer/Brenner
- 7: Kohlenwasserstoffhaltiger Eduktstrom
- 8: Sauerstoff- und optional dampfhaltiger Eduktstrom
- 9: Eduktgasgemisch
- 10: Flamme
- 11: Schicht aus Formkörpern
- 12: Produktsynthesegas
- 13: Öffnung zur Ausleitung des Produktsynthesegases
- 14: Verbindungsleitung
- 15: durchmischungserhöhende Einbauten

## Patentansprüche

1. Partialoxidationsverfahren zur Erzeugung eines kohlenmonoxid- und wasserstoffhaltigen Synthesegases aus kohlenwasserstoffhaltigem Eduktmaterial, wobei folgende Verfahrensschritte durchgeführt werden:
a) Bereitstellen der Edukte, umfassend einen kohlenwasserstoffhaltigen Stoff, ein sauerstoffhaltiges Gas und optional Dampf,
b) Bereitstellen eines Reaktors, umfassend ein stehend angeordnetes, mit feuerfestem Material ausgekleidetes Reaktorgefäß mit einer darin liegenden Reaktionskammer, einer am oberen Ende des Gefäßes liegenden Öffnung für das Einleiten des Eduktgemisches und einer am unteren Ende liegenden Öffnung für das Ausleiten des Synthesegases als Produktgas und eine daran anschließende Verbindungsleitung zu einem Gaskühler und einen Mischer/Brenner zur Erzeugung eines Gemisches aus den Edukten, wobei der Mischer/Brenner so auf die obere Öffnung des Reaktorgefäßes montiert ist, dass über ihn das Eduktgemisch in das Reaktorgefäß eingeleitet werden kann,
c) Einleiten der Edukte über den Mischer/Brenner in die Reaktionskammer des Reaktorgefäßes, mit den für die chemischen Umwandlungsreaktionen der Partialoxidation erforderlichen Temperaturen und Drücken,
d) Umwandeln des Eduktgemischs in Synthesegas innerhalb der Reaktionskammer,
e) Ausleiten des Synthesegas-Produktgaseses durch die Verbindungsleitung aus dem Reaktorgefäß zur weiteren Behandlung in einem Gaskühler,
**dadurch gekennzeichnet, dass**
f) die Durchmischung des Synthesegas-Produktgaseses in der Reaktionskammer und/oder in der Verbindungsleitung zum Gaskühler erhöht wird, indem dort die Durchmischung erhöhende Einbauten und/oder eine Schicht aus Formkörpern installiert werden.

2. Verfahren gemäß Anspruch 1, **dadurch gekennzeichnet, dass** es sich bei den die Durchmischung erhöhenden Einbauten um statische Mischer handelt.

3. Verfahren gemäß Anspruch 1, **dadurch gekennzeichnet, dass** es sich bei den die Durchmischung erhöhenden Einbauten strukturierte Packungen handelt.

4. Verfahren gemäß Anspruch 1, **dadurch gekennzeichnet, dass** es sich bei den Formkörpern um Kugeln handelt.

5. Verfahren gemäß Anspruch 1, **dadurch gekennzeichnet, dass** die statische Mischeinrichtung oder die Formkörpern der Schüttung aus Schaumkeramik bestehen.

6. Verfahren gemäß einem der vorangehenden Ansprüche, **dadurch gekennzeichnet, dass** die Mischeinrichtung oder die Formkörper aus Al₂O₃ bestehen.

7. Verfahren gemäß einem der vorangehenden Ansprüche, **dadurch gekennzeichnet, dass** die Mischeinrichtung oder die Formkörper zwischen 1 und 50 Vol.-%, bevorzugt zwischen 20 und 40 Vol.-% der Reaktionskammer einnehmen.

8. Verfahren gemäß einem der vorangehenden Ansprüche, **dadurch gekennzeichnet, dass** das Verfahren mit einem Druck zwischen 10 und 100 bar in der Reaktorkammer durchgeführt wird.

9. Verfahren gemäß einem der vorangehenden Ansprüche, **dadurch gekennzeichnet, dass** das Verfahren mit einer Temperatur zwischen 900 und 1500°C in der Reaktorkammer durchgeführt wird.

10. Verfahren gemäß einem der Ansprüche 1 bis 6, **dadurch gekennzeichnet, dass** das Verfahren mit einer Temperatur zwischen 1200 und 1400°C in der Reaktorkammer durchgeführt wird.

11. Verfahren gemäß einem der vorangehenden Ansprüche, **dadurch gekennzeichnet, dass** das Verfahren mit einem molaren Mengenverhältnis von Dampf / Kohlenstoff im Eduktgasgemisch zwischen 0 und 0,6 durchgeführt wird.

12. Verfahren gemäß einem der vorangehenden Ansprüche, **dadurch gekennzeichnet, dass** das Verfahren mit einem molaren Mengenverhältnis von Sauerstoff / Kohlenstoff im Eduktgasgemisch zwischen 0,5 und 0,8 durchgeführt wird.

13. Anlage zur Durchführung des Partialoxidationsverfahrens gemäß einem der vorhergehenden Ansprüche, umfassend
- einen Reaktor, welcher ein stehend angeordnetes, mit feuerfestem Material ausgekleidetes Reaktorgefäß mit einer darin liegenden Reaktionskammer, einer am oberen Ende des Gefäßes liegenden Öffnung für die Einleitung des Eduktgemisches und einer am unteren Ende liegenden Öffnung für die Ausleitung des Synthesegases als Produktgas umfasst,
- eine an die Öffnung des Reaktorgefäßes zur Ausleitung des Synthesegases anschließende Verbindungsleitung zu einem Gaskühler,
- einen Mischer/Brenner zur Erzeugung eines Gemisches aus den Edukten, wobei der Mischer/Brenner so auf die obere Öffnung des Reaktorgefäßes montiert ist, dass über ihn das Eduktgemisch in das Reaktorgefäß eingeleitet werden kann,
**dadurch gekennzeichnet, dass** die Reaktionskammer und/oder die Verbindungsleitung zum Gaskühler mit die Durchmischung erhöhenden Einbauten und/oder einer Schicht aus Formkörpern zur Durchleitung der Prozessgase ausgestattet sind.
